# EUROPEAN PATENT SPECIFICATION

(11) **EP 2 656 685 B1**
(45) Date of publication and mention of the grant of the patent: **14.10.2015**
(21) Application number: 10861043.7
(22) Date of filing: 21.12.2010
(51) Int. Cl.: H05B 3/20, H05B 3/34, F24D 13/02

(54) **PANEL WITH HEATED LAYER**
PLATTE MIT GEHEIZTER SCHICHT
PANNEAU AVEC COUCHE CHAUFFÉE

(43) Date of publication of application: 30.10.2013
(60) Divisional application: 15158888.6
(73) Proprietor: Milwaukee Composites, Inc., Oak Creek WI 53154 (US)
(72) Inventor: KOBER, Jeffrey, F., Milwaukee WI 53213 (US); DESING, James, E., Elkhorn WI 53212 (US); TOMMET, John, J., South Milwaukee WI 53172 (US)
(74) Representative: Copsey, Timothy Graham
(86) International application number: PCT/US2010/061519
(87) International publication number: WO 2012/087294

(56) References cited:
- WO-A2-2007/014340
- JP-A- 2005 282 998
- JP-A- 2010 145 076
- US-A- 4 115 917
- US-A- 5 876 652
- US-A1- 2007 215 589
- US-B1- 6 824 851
- US-B2- 7 393 577

## Description

### BACKGROUND

This invention relates generally to heated panels, and more particularly to heated panels suitable for use in transit conveyances, such as subway cars, high speed cars, rail cars, buses, rapid response vehicles, marine vessels, semi-trailers, van-body "box" trucks, elevator cars, etc. JP2010/145076 describes a panel for use in floor heating, where the panel is produced by a simplified manufacturing process.

The invention is a panel according to claim 1 and a method according to claim 9.

### BRIEF DESCRIPTION OF THE DRAWINGS

FIG. 1 is a perspective view of a heated panel, according to one construction;
FIG. 2 is a perspective view of a heated panel, according to another construction;
FIG. 3 is an exploded assembly view of the heated panels of FIGS. 1 and 2, which may be jointly constructed;
FIG. 4 is a detail view of a recessed pocket formed in a closeout of one of the heated panels shown in FIG. 3;
FIG. 5 is a perspective view of the jointly-constructed heated panels of FIGS. 1 and 2, with a first skin removed therefrom to illustrate the heating elements;
FIG. 6 is a cross-sectional view of an electrical terminal block of the heated panel of FIG. 1, taken through line 6-6 of FIG. 1;
FIG. 7 is a cross-sectional view of a hollow wire fitting, taken through line 7-7 of FIG. 2;
FIG. 8 is a schematic diagram illustrating the heating elements of the heated panels of FIGS. 1 and 2 coupled to voltage sources;
FIG. 9 is a schematic panel layout illustrating an arrangement of multiple, series-connected carbon fiber heating elements of a first type in a heated panel;
FIG. 10 is a schematic panel layout illustrating an arrangement of multiple, series-connected carbon fiber heating elements of a second type in a heated panel;
FIG. 11 is an exploded assembly view of a heated panel in which the heating element forms the core;
FIG. 12 is a top view of a carbon fiber heating element having a diamond weave;
FIG. 13 is a perspective view of a carbon fiber film heating element; and
FIG. 14 is a cross-sectional view of the carbon fiber film heating element of FIG. 13 bonded to the outside surface of the first skin of a composite panel.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

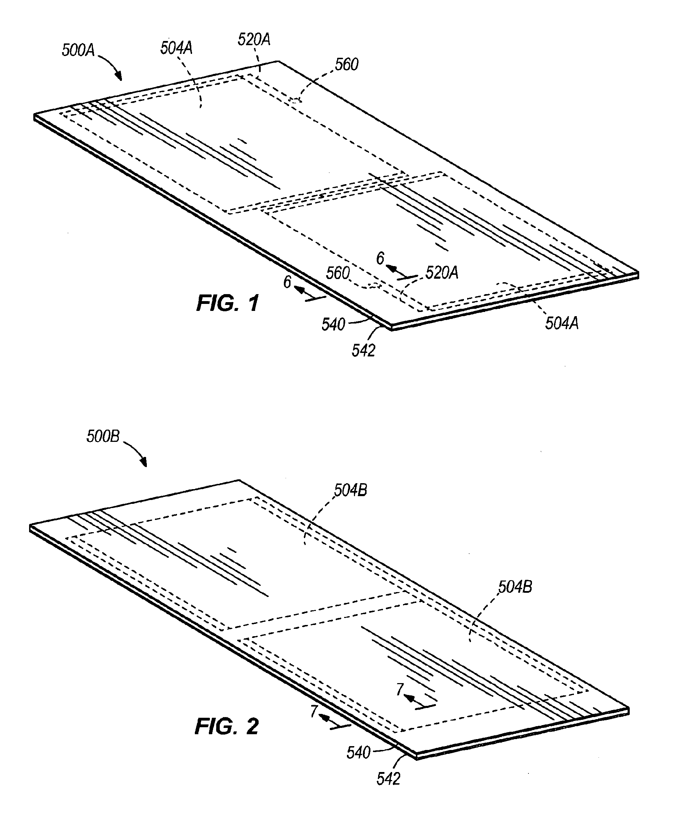

FIGS. 1-7 illustrate heated panels 500A, 500B. Each of the heated panels 500A, 500B is a composite panel and may be constructed according to a method disclosed in U.S. Patent No. 6,824,851, or a similar variation. However, each panel 500A, 500B further includes an embedded heated layer as described below.

With reference to FIGS. 1 and 2, each of the heated panels 500A, 500B includes a respective pair of heating elements 504A, 504B that cover a majority of each panel's plan view area. Each heating element 504A, 504B may include a resistive heating element, such as a woven sheet 508A, 508B including a plurality of strands of carbon fiber, extending between two opposed electrical buses (electrical buses 512A of the first heating elements 504A, and electrical buses 512B, 512B'of the second heating elements 504B). The weave pattern of the carbon fiber strands making up the sheets 508A, 508B may be a standard "basket" weave with one set of strands running parallel to the electrical buses 512A, 512B, 512B' and another set of strands being woven into the first set of strands perpendicularly, but other weaves are optional. The sheets 508A, 508B may be provided as pliable sheets constructed of raw carbon fiber material (i.e., unstructured or pre-cured, rather than rigid carbon fiber panels), or alternately, the sheets 508A, 508B can be provided as pre-cured, structured carbon fiber.

The sheets 508A, 508B may be constructed of any one of a number of different types of carbon fiber strands to provide each heating element 504A, 504B with a particular electrical resistance corresponding to the mass per unit area of the sheet. The size and/or type of carbon fiber strands in the woven sheets 508A, 508B may be selected from a plurality of available sizes and types based on the mass per unit area to achieve a desired electrical resistance for a particular installation. For example, the first sheet 508A may be woven from coarse-strand carbon fiber and have a mass per unit area of between about 280 g/m² and 320 g/m², and the second sheet 508B may be woven from fine-strand carbon fiber and have a mass per unit area of between about 180 g/m² and about 220 g/m². In one construction, the first sheet 508A is woven from coarse-strand carbon fiber having a mass per unit area of about 295 g/m², and the second sheet 508B is woven from fine-strand carbon fiber having a mass per unit area of about 192 g/m². However, woven carbon fiber sheets of other types, having other values of mass per unit area, can be used to achieve a particular desired result in the heating elements 504A, 504B. Furthermore, carbon fiber may be provided in alternate forms, including various woven or non-woven forms as described in some detail further below, to provide a resistive heating element.

Each electrical bus 512A, 512B of each heating element 504A, 504B may be constructed of two sheets or bars of an electrical conductor such as copper that sandwich an edge of the carbon fiber sheet and are fastened together. The sheets or bars that make up each of the electrical buses 512A, 512B may be coupled with mechanical fasteners (e.g., by screws, rivets, etc.) or alternately, may be coupled by bonding (e.g., by welding, brazing, adhesive, etc.). As shown in FIG. 1, the heating elements 504A of the first heated panel 500A are electrically coupled in series by coupling together one of the buses 512A of each heating element 504A with a connector wire 516. As shown in FIG. 2, the heating elements 504B of the second heated panel 500B are electrically coupled in series by providing one of the electrical buses 512B' as a common electrical bus for both heating elements 504B, and providing one electrical bus 512B on each heating element 504B that is not shared with the other heating element 504B. Each heated panel 500A, 500B further includes a pair of wires or electrical leads 520A, 520B that enable each panel 500A, 500B (and the heating elements 504A, 504B therein) to be coupled to an external voltage source. In the first panel 500A, one of the two leads 520A is coupled to each of the two electrical buses 512A that are not directly coupled by the connector wire 516. In the second panel 500B, one of the two leads 520B is coupled to the unique (non-shared) electrical bus 512B of each heating element 504B. If desired (e.g., to achieve a particular net electrical resistance for attaining a particular heat output, or to preserve operation of one heating element when another fails), the two heating elements 504A of the first panel 500A or the two heating elements 504B of the second panel 500B may alternately be coupled in parallel rather than series. It should also be noted that either of the heated panels 500A, 500B may be provided with a single heating element or more than two heating elements to cover a predetermined portion of the panel 500A, 500B, which may or may not be a majority depending upon the particular installation.

Another feature distinguishing the heated panels 500A, 500B of FIGS. 1 and 2 is that the electrical buses 512A of the first heating element 504A are arranged along the short edges of the rectangular carbon fiber sheet 508A, while the electrical buses 512B, 512B' of the second heating element 504B are arranged along the long edges of the rectangular carbon fiber sheet 508B. This illustrates another way, independent of carbon fiber strand size/weave variation, of varying the electrical resistance (and heat output for a given applied voltage) of the heating elements 504A, 504B without modifying the areas of the carbon fiber sheets 508A, 508B since electrical resistance varies proportionally with length and inversely proportionally with cross-sectional area. This enables a degree of modularization by enabling heating elements of a single size (plan view area) that can provide various heating outputs as necessary for a particular installation, or alternately, enables heating elements of a single size to be coupled to different voltage sources while outputting similar amounts or the same amount of heat. Furthermore, this promotes design flexibility in multi-panel floor constructions, for example, in which a plurality of heated panels may be coupled together and/or coupled to a common voltage source.

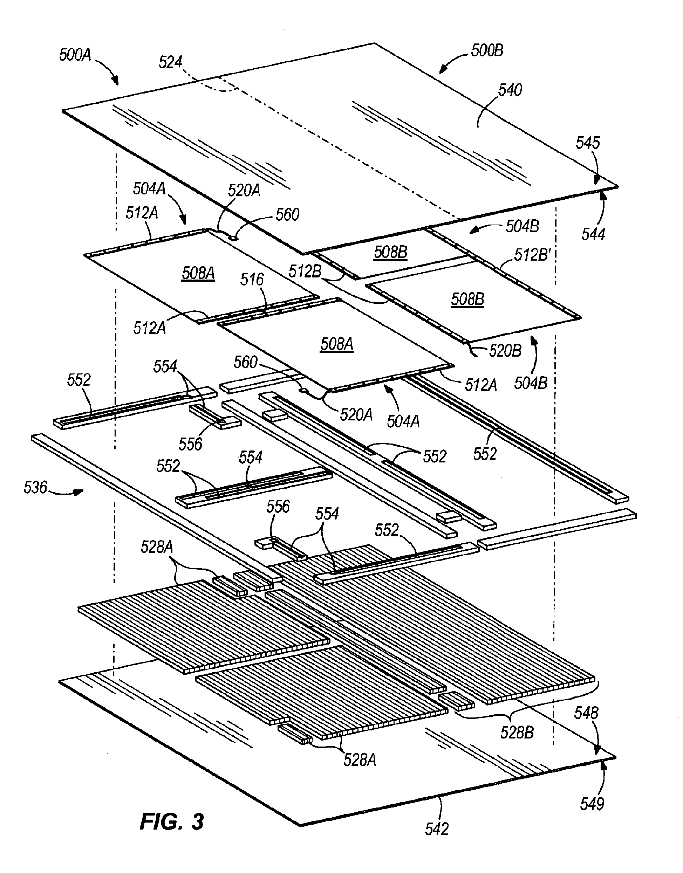

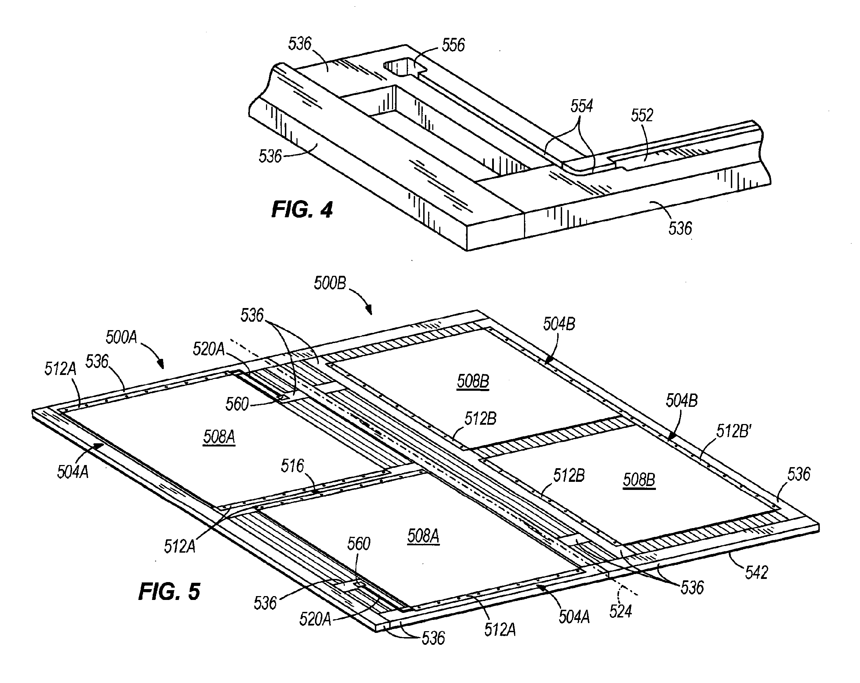

With reference to FIGS. 3-5, the construction of the panels 500A, 500B are described in further detail. Although not required, as shown in at least FIGS. 3 and 5, the two panels 500A, 500B of FIGS. 1 and 2 may be jointly constructed. If desired to separate the panels 500A, 500B, a cut along line 524 may be made after the panels 500A, 500B have cured. Each panel 500A, 500B includes a lightweight core 528A, 528B constructed of a low-density material that is strong in compression (e.g., foam, balsa wood, plywood, reinforced materials, or any combination thereof). In one construction, the cores 528A, 528B are precured reinforced cores constructed as disclosed in U.S. Patent No. 6,824,851 to include a plurality of alternating foam strips 530 and precured phenolic resin ribs 532. A plurality of closeouts 536 are positioned adjacent or around each core 528A, 528B and define a periphery of each panel 500A, 500B. Some of the closeouts 536 are coupled to the respective cores 528A, 528B to directly surround the peripheries thereof. However, as shown in FIGS. 3 and 5, each of the panels 500A, 500B can optionally be segmented to include multiple cores 528A, 528B, and some of the closeouts 536 may define "interior" closeouts 536 that do not define the periphery of a panel 500A, 500B. The closeouts 536 can be constructed from higher density materials than the cores 528A, 528B such as blocks of reinforced phenolic material that is machineable as disclosed in U.S. Patent No. 6,824,851. Like the cores 528A, 528B, the closeouts 536 are precured prior to the curing of a pair of skins 540, 542 that sandwich the cores 528A, 528B and the closeouts 536.

The cores 528A, 528B and the closeouts 536 are sandwiched between a first skin 540 and a second skin 542. If the two panels 500A, 500B are jointly constructed as shown, the skins 540, 542 are common to both panels 500A, 500B (until the finished panels 500A, 500B are finally cut apart). The first skin 540 includes a surface 544 that faces the cores 528A, 528B and an opposite surface 545 that faces away from the cores 528A, 528B and defines one face, an interior face, of the panels 500A, 500B. The second skin 542 includes a surface 548 that faces the cores 528A, 528B and an opposite surface 549 that faces away from the cores 528A, 528B and defines a second face, and exterior face, of the panels 500A, 500B. The core-facing surfaces 544, 548 of the first and second skins 540, 542 are bonded with the cores 528A, 528B and the closeouts 536, with the peripheral closeouts 536 forming a sealed panel boundary that inhibits intrusion of foreign material, such as water, into the interior and the cores 528A, 528B of the panels 500A, 500B. The outward face 545 of the first skin 540 may define an interior face of the panels 500A, 500B for defining an interior boundary of a compartment (e.g., the floor of a conveyance such as a train car, bus, elevator, etc.), and the outward face 549 of the second skin 542 may define an exterior face of the panels 500A, 500B for facing a support structure or frame that defines or surrounds the compartment. The skins 540, 542 may be constructed of reinforced phenolic resin (e.g., fiberglass-reinforced phenolic resin) in some constructions.

As best shown in FIG. 4, some of the closeouts 536 may include one or more recessed pockets 552, 554, 556 for receiving portions of the heating elements 504A, 504B and associated wiring. For example, a first set of recessed pockets 552 are formed in certain ones of the closeouts 536 to receive each of the electrical buses 512A, 512B, 512B'. Each of the recessed pockets 552 has a plan view shape/area and a depth corresponding to the shape/area and the depth of a corresponding one of the electrical buses 512A, 512B, 512B'. Thus, the electrical buses 512A, 512B, 512B' do not present any substantial increase in the overall thickness of the panels 500A, 500B compared to non-heated panels. Thus, tooling for the manufacturer need not be specialized, and easy convertibility is provided for an end user between non-heated and heated panels. For example, the heated panels 500A, 500B may have an overall thickness of about 19 millimeters (0.75 inches), which is equivalent to a standard overall thickness for conventional panels, such as non-heated floor panels, in certain industries. The carbon fiber sheets 508A, 508B may have a thickness that is significantly less than that of the electrical buses 512A, 512B, 512B', and thus, the carbon fiber sheets 508A, 508B may not need to be recessed to avoid substantial increase or deviation in the overall panel thickness. For example, the carbon fiber sheets 508A, 508B may have a thickness of about 0.254 millimeters (0.010 inches) to about 0.381 millimeters (0.015 inches). If the carbon fiber sheets 508A, 508B have a significant enough thickness to warrant counteractive measures, the carbon fiber sheets 508A, 508B may be positioned exclusively over the cores 528A, 528B, which may have a reduced thickness compared to the closeouts 536. The difference in thickness between the cores 528A, 528B and the closeouts 536 may be about equal to the thickness of the carbon fiber sheets 508A, 508B so that a substantially uniform, flat receiving surface is created for the core-facing surface 544 of the first skin 540.

In addition to the recessed pockets 552 for the electrical buses 512A, 512B, 512B', recessed pockets or channels 554 are also formed in certain ones of the closeouts 536 to receive electrical wires coupled to the heating elements 504A, 504B, such as the connector wire 516 and the leads 520A, 520B. Similar to the recessed pockets 552 for the electrical buses 512A, 512B, 512B', the recessed pockets or channels 554 inhibit increase or deviation in the overall panel thickness due to the various electrical wires 516, 520A, 520B.

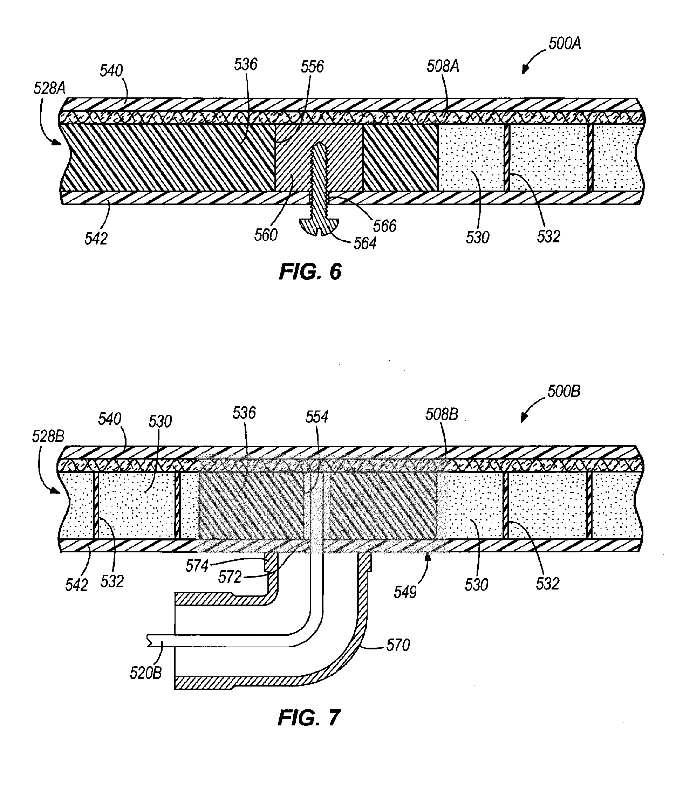

With particular reference to FIGS. 4-6, additional recessed pockets 556 are provided in certain ones of the closeouts 536. The recessed pockets 556 are configured to receive electrically-conductive terminal blocks 560. The terminal blocks 560 are provided at the end of each of the leads 520A of the first heating elements 504A in the illustrated construction and may be constructed of a solid piece of copper in some constructions. The terminal blocks 560 are fully recessed into the recessed pockets 556 to inhibit increase or deviation in the overall panel thickness. As shown in FIG. 6, a terminal post 564 (e.g., a screw in the illustrated construction) may be engaged with each terminal block 560 to provide means for coupling the heating elements 504A with a voltage source. In the illustrated construction, each terminal post 564 is threaded into a drilled and tapped hole provided in the respective terminal block 560, and the terminal post 564 is configured to extend through an aperture 566 in the second skin 542 to protrude outwardly from the panel 500A. Although the terminal block 560 is shown with a thickness equivalent to that of the closeouts 536, the terminal block 560 may have a reduced thickness (e.g., about half or one-fourth the thickness of the closeouts 536), and in such constructions the terminal block 560 may be positioned adjacent the second skin 542, with an additional closeout block positioned over it, or the recessed pocket 556 may simply be provided with a smaller depth that is substantially equal to the thickness of the terminal block 560. The aperture 566 may be drilled after the panel 500A is cured. The panel 500A can alternately be provided with any desired type of connector or plug to couple the heating elements 504A with an external voltage source. Although not shown, the second panel 500B may have a similar arrangement.

FIG. 7 illustrates an alternate means for enabling electrical connection of the heating elements 504B to an external voltage source. In the construction of FIG. 7, the electrical leads 520B are provided with sufficient length to extend outwardly from the panel 500B. In order to facilitate passage of the leads 520B outward from the panel 500B, a hollow fitting 570 is coupled to the outward-facing surface 549 of the second skin 542 at a location 572 where the electrical leads 520B pass through the second skin 542. The location 572 at which each electrical lead 520B passes through the second skin 542 may be in communication with one of the recessed wire channels 554, which may be formed directly within a recessed pocket 552 that receives an electrical bus 512B, 512B'. In the illustrated construction, the hollow fitting 570 is a 90-degree "elbow" fitting, which may be coupled to the second skin 542 with adhesive, although other suitable attachment means, such as mechanical fasters, may also be utilized. In the illustrated construction, the hollow fitting 570 includes a flange 574 provided for direct coupling to the exterior face of the panel 500A provided by the surface 549 of the second skin 542. Although not shown, the first panel 500A may have a similar arrangement.

It should be noted that the layers shown in the cross-sectional views of FIGS. 6 and 7 are not necessarily to scale, and represent only one possibly layering scheme. For example, each of the carbon fiber sheets 508A, 508B is shown to occupy a discrete and substantial space between the core 528A, 528B and the first skin 540. However, the carbon fiber sheets 508A, 508B may actually be substantially thinner than the first skin 540. Furthermore, the carbon fiber sheets 508A, 508B may not be positioned between the core 528A, 528B and the core-facing surface 544 of the first skin 540, but may be embedded within the first skin 540 to lie between the two surfaces 544, 545 of the first skin 540 by wetting out the carbon fiber sheets 508A, 508B with liquid resin (e.g., fiberglass reinforced phenolic resin) that is later cured to form the solid resin skin 540 with the carbon fiber sheets 508A, 508B encased therein. In such a construction, a manufacturing method may include applying a first liquid phenolic resin layer onto the face of the core 528A, 528B that is to receive the first skin 540, placing the carbon fiber sheets 508A, 508B of the heating elements 504A, 504B into the first liquid phenolic resin layer, and then applying a second liquid phenolic layer onto the carbon fiber sheets 508A, 508B. One or more reinforcing layers (e.g., fiberglass mat) may also be provided on top of and below the carbon fiber sheets 508A, 508B and saturated with liquid phenolic resin. Upon curing of the liquid phenolic resin (e.g., by heat and pressure), a unitary skin 540 is formed that contains the carbon fiber sheets 508A, 508B between its surfaces 544, 545. The liquid phenolic resin of the first and second skins 540, 542 also form strong bonds with the phenolic ribs 532 of the cores 528A, 528B during the curing process so that the various layers are unitized into a solid composite panel structure. Alternate constructions may also be employed for the positioning of the heating elements 504A, 504B. For example, the heating elements 504A, 504B (and particularly the carbon fiber sheets 508A, 508B) may even be provided on an outward surface of the panel 500A, 500B such as on the surface 545 of the first skin 540, and may be applied to the first skin 540 after the curing thereof. Whether above, below, or inside the first skin 540, and whether applied before or after curing of the first skin 540, all of the above examples of specific positions of the heating elements 504A, 504B are considered to position the heating elements 504A, 504B adjacent the interior face 545 of the panel 500A, 500B to facilitate ample heating to the interior side of the panel 500A, 500B.

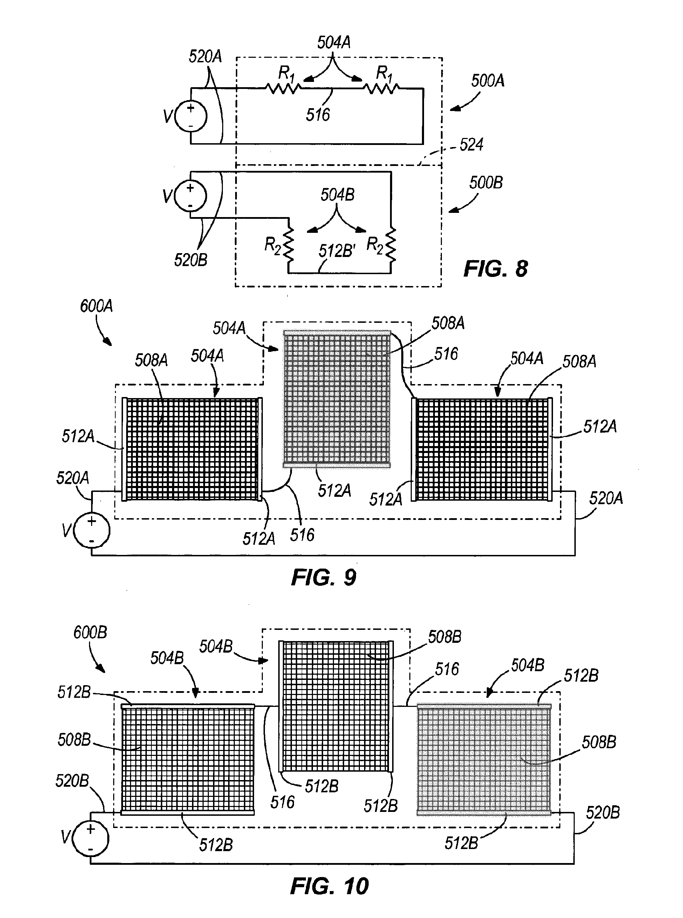

Electrical schematics showing the heating elements 504A, 504B of the respective panels 500A, 500B are illustrated in FIG. 8. Although shown together in FIG. 8 for convenience, the panels 500A, 500B may be separated from each other along line 524 to permit separate installation as mentioned above. The heating elements 504A of the first panel 500A are each shown schematically as a resistance R1, and the heating elements 504B of the second panel 500B are each shown schematically as a resistance R2. Similar voltage sources having a first voltage V are illustrated as being applied to each set of heating elements 504A, 504B. If the resistance R1 of each first heating element 504A and the resistance R2 of each second heating element 504B are substantially equivalent, then a substantially equivalent electrical current will flow through each set of heating elements 504A, 504B, and substantially equivalent heating is provided to each of the panels 500A, 500B. However, the resistances R1, R2 are different in some constructions due to at least one of: the type of material of the sheets 508A, 508B and the physical arrangement of each sheet 508A, 508B between its respective electrical buses, both of which can cause a change in both resistance and electrical current, and thus heat output.

As shown in the drawings, the heating elements 504A, 504B cover a majority but less than entire panel area. However, it should be realized that virtually any desired configuration can be achieved with respect to the necessary heat density and heated area for a particular panel. For example, some panels may only have certain designated portions used to define a heated passenger compartment, for example, and thus heating is only provided at those particular locations. In other constructions, the size of the heating elements 504A, 504B may be substantially equal to the entire area of the panel(s) 500A, 500B. In further constructions, the first skin 540 may achieve a substantially uniform elevated temperature at the interior face 545 even though the heating elements 504A, 504B do not cover the entire panel area.

FIGS. 9 and 10 schematically illustrate layouts for panels 600A, 600B that utilize more than two heating elements 504A, 504B each. FIG. 9 illustrates a generally "T" shaped panel 600A in which three heating elements 504A are provided to cover a majority of the area of the panel 600A. The panel 600A can have the basic construction described above. As with the panel 500A of FIG. 1, the heating elements 504A include electrical buses 512A provided across each minor dimension of the rectangular carbon fiber sheets 508A. The three heating elements 504A are coupled in series via connecting wires 516 between adjacent electrical buses 512A. The panel 600B of FIG. 10 is substantially identical to the panel 600A of FIG. 9, except for the structure and connection of the heating elements 504B. As with the panel 500B of FIG. 2, the heating elements 504B include electrical buses 512B provided across each major dimension of the rectangular carbon fiber sheets 508B. The three heating elements 504B are coupled in series via connecting wires 516 between adjacent electrical buses 512B. The central heating element 504A, 504B in each panel 600A, 600B has a rotational orientation that is 90-degrees offset from the two remaining heating elements 504A, 504B in each panel 600A, 600B.

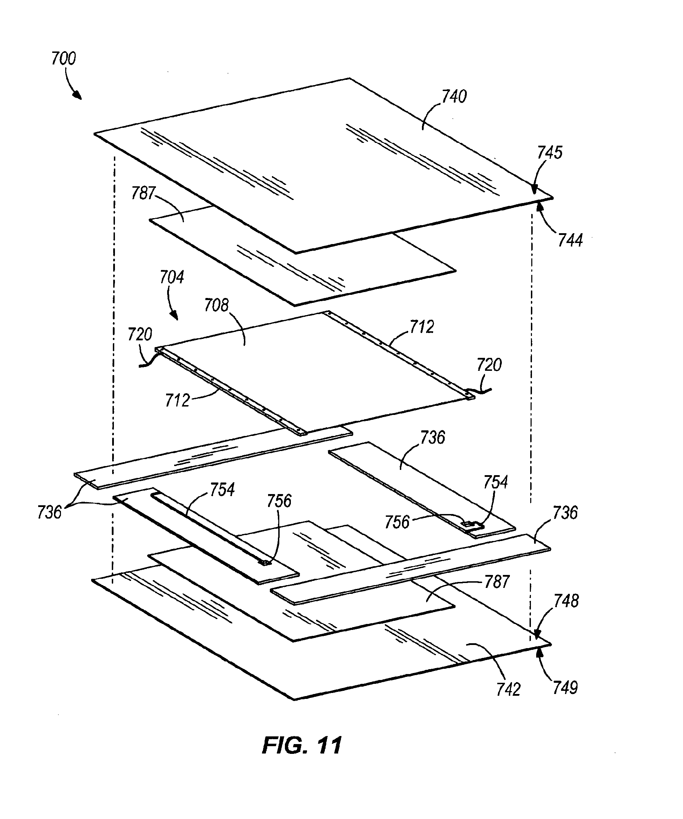

As shown by the discrepancy in line weight in FIGS. 9 and 10, the carbon fiber sheets 508A in the first panel 600A are formed from coarser or heavier carbon fiber than the sheets 508B in the second panel 600B. Therefore, the carbon fiber of the first sheets 508A has substantially less electrical resistance. However, because the two electrical buses 512B of each of the second heating elements 504B are placed closer together than the electrical buses 512A of each of the first heating elements 504A, the net resistance of each heating element 504B of the second panel 600B may be substantially equivalent to the net resistance of each heating element 504A of the first panel 600A. To make a heating element with a lower resistance than the illustrated heating elements 504A, 504B, a coarse carbon fiber such as that of the sheets 508A may be used with the bus configuration shown in FIG. 10. To make a heating element with a higher resistance than the illustrated heating elements 504A, 504B, a fine carbon fiber such as that of the sheets 508B may be used with the bus configuration shown in FIG. 9. Options for constructing and arranging one or more heated panels may further include providing one or more of any of the described heating elements in a single panel, or in multiple electrically-connected panels, and connecting the various heating elements and the various panels in parallel or in series with one or multiple voltage sources. FIG.11 illustrates yet another heated panel 700 which is not an embodiment of the invention but is presented as an example useful for understanding the invention.

The panel includes a first skin 740, a second skin 742, and a plurality of closeouts 736, all of which may be substantially similar to the corresponding features of the panels 500A, 500B described above. The panel 700 includes a heating element 704 similar to the heating element 504B described above, but variations of the heating element 704 are certainly contemplated. In the illustrated construction, the heating element 704 includes a sheet 708 of woven carbon fiber strands extending between two opposed electrical buses 712, each having an electrical lead 720 extending therefrom for connection to a voltage source (not shown). As described with respect to the electrical buses 512A, 512B, 512B' of the panels 500A, 500B, the electrical buses 712 have a thickness substantially greater than a thickness of the carbon fiber sheet 708. Rather than provide recessed pockets for receiving the electrical buses 712, the panel 700 is provided without any conventional core whatsoever, and a pair of ancillary reinforcement layers 787 (e.g., fiberglass mats) are placed above and below the carbon fiber sheet 708, but not over the electrical buses 712, to provide flush faces for the surfaces 744, 748 of the first and second skins 740, 742 to abut. In the construction of FIG. 11, the overall thickness of the panel 700 between the outer skin surfaces 745, 749 may be substantially thinner than that of the panels 500A, 500B (e.g., about 6.35 millimeters (0.25 inches) compared to about 19 millimeters (0.75 inches)). The panel 700 may be considered "coreless" with respect to a conventional core, but the heating element 704 and the ancillary reinforcement layers 787 may be considered to provide a panel core. As with the closeouts 536 described above, the closeouts 736 of the panel 700 can include recessed channels 754 for the electrical leads 720 and/or recessed pockets 756 for electrical terminal blocks (not shown).

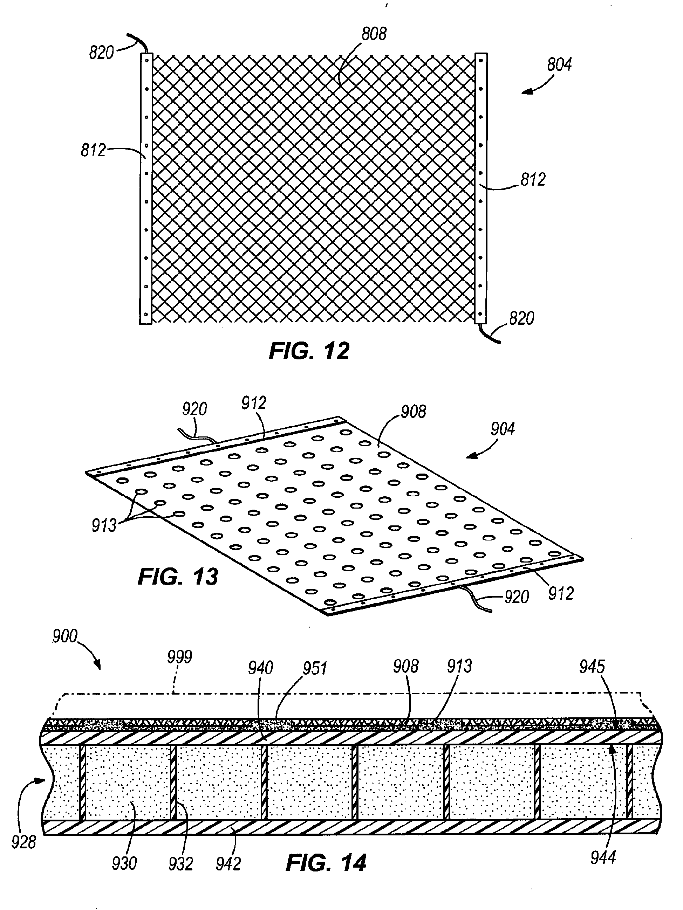

FIG. 12 illustrates a heating element 804 having an alternate construction from the heating layers 504A, 504B, 704 described above. As opposed to a 90-degree basket weave having one set of strands parallel to the electrical buses and another set perpendicular to the electrical buses, the sheet 808 of the heating element 804 of FIG. 12 is provided with a diamond weave in which all of the carbon fiber strands run at substantially 45-degree angles with respect to the electrical buses 812. As with the other heating elements discussed above, the heating element 804 includes an electrical lead 820 extending from each electrical bus 812 to facilitate connection to an external voltage source. Although FIG. 12 illustrates one possible construction, it should be understood that other types of diamond or non-diamond patterns may also be used.

FIG. 13 illustrates yet another type of heating element 904 for use in constructing a heated panel 900 (FIG. 14). The heating element 904 includes a resistive carbon fiber membrane or film 908, rather than a woven fabric-like sheet. The carbon fiber film 908 may be a composite film such as a thin, closed and fiber-reinforced PET film with integrated copper electrical buses 912. The carbon fiber film 908 may have a thickness less than about 0.5 mm. The film 908 may also be provided with a plurality of apertures or perforations 913. Although the film 908 of FIG. 13 can be incorporated into a composite panel in a manner similar to those described above, FIG. 14 illustrates one particularly unique means for constructing a heated composite panel 900.

Similar to other panels described above, the panel 900 includes first and second skins 940, 942 and a core 928 (e.g., of foam strips 930 and precured phenolic ribs 932) therebetween. However, FIG. 14 illustrates that the heating element 904 may be positioned on a surface 945 of the first skin 940 opposite a core-facing surface 944. In some constructions, the heating element 904 may be bonded to the surface 945 of the first skin 940 with an adhesive 951. Thus, the heating element 904 forms an outward surface of the panel 900 as a whole. The surface 945 of the first skin 940 receiving the heating element 904 may be an interior surface of the panel 900 used to define the interior boundary of a compartment. In order to cover the heating element 904 and inhibit damage thereto which may otherwise occur by foot traffic or other means, an additional covering, such as a flooring mat 999, may be placed over the panel 900.

As mentioned briefly above, a plurality of heated composite panels, according to any construction described herein, may be used together in defining a floor structure of a conveyance, such as a train, bus, elevator, etc. The heating elements provided in all of the plurality of heated panels or a designated group of heated panels may be coupled together in parallel or in series with a common voltage source. Each heated panel or group of heated panels may also be coupled with unique voltage sources, which may provide substantially equivalent voltages, different voltages, or adjustable voltages.

Various features and advantages of the invention are set forth in the following claims.

## Claims

1. A panel (500A,500B,600A,600B,800,900) having an exterior face (549,949) thereof adapted for attachment to a support frame and an interior face (545,945) thereof adapted for defining a boundary of a compartment, the panel comprising:
a core (528A,528B,928) encapsulated within a panel frame,
the core having first and second faces thereof, and a periphery thereof, first (540,940) and second skins (542,942) attached to the first and second faces of the core;
one or more closeouts (536) disposed between the skins (540,542,940, 942) about the periphery of the core (528A,528B,928), with the one or more closeouts (536) being attached to the first (540,940) and second skins (542,942);
a heating element (504A,504B,704,804,904) adjacent the interior face (545,945) of the panel;
**characterized by**:
the panel frame being of reinforced phenolic material;
the heating element including carbon fiber material extending between and electrically coupling two opposed electrical buses (512A,512B,512B',812,912);
an electrical wire (516,520A,520B,820,920) coupled to each of the electrical buses of the heating element (504A,504B,804,904) for introducing a voltage across the heating element;
the electrical buses (512A,512B,512B',812,912) having a thickness greater than the thickness of the carbon fiber material, and
the electrical buses being received in recessed pockets (552,554,556,) of the one or more closeouts (536).

2. The panel of claim 1, wherein the carbon fiber material includes a plurality of carbon fiber strands woven together in a diamond pattern or in a perforated film, and where each one of the electrical buses (512A,512B,512B',812,912) may include a pair of copper plates that sandwich a corresponding end of the carbon fiber material.

3. The panel of claim 1, wherein the heating element (504A,504B,804,904) is embedded into the first skin (540,940) of the panel, and integrally joined thereto by the reinforced phenolic material.

4. The panel of claim 4, wherein the electrical wires (516,520A,520B,820,920) are positioned in recessed pockets of the one or more closeouts, and where the one or more closeouts having the recessed pockets may be machineable phenolic blocks.

5. The panel of claim 1, wherein each of the electrical wires (516,520A,520B,820, 920) terminates at a corresponding electrically-conductive terminal block (560), each of the terminal blocks (560) being received in a corresponding recessed pocket (552,554,556) in the one or more closeouts (536), wherein a terminal post (564) is positioned in each of the terminal blocks (560) and extends outwardly from the panel for connecting the heating element (504A,504B,804,904) to a voltage source, and where the one or more closeouts having the recessed pockets (552,554,556) may be machineable phenolic blocks.

6. The panel of claim 1, further comprising a pair of hollow fittings (570) coupled to the exterior face of the panel, each of the hollow fittings providing a conduit through which a corresponding one of the electrical wires (516,520A,520B,820,920) passes and extends away from the exterior face (549,949) for connection to a voltage source.

7. The panel of claim 1, wherein the heating element (504A,804,904) is a first heating element, the panel further comprising at least one additional heating element (504B) coupled to the first heating element in series, and where the first heating element and the at least one additional heating element may have substantially equivalent surface area and may provide a plurality of uniformly-heated areas within the panel.

8. The panel of claim 7, wherein each of the first heating element (504A,504B,804, 904) and the at least one additional heating element (504B) has a major dimension and a minor dimension, and the electrical buses (512A,512B,512B',812,912) are provided across the major dimension, and where each of the first heating element and the at least one additional heating element may have a major dimension and a minor dimension, and the electrical buses may be provided across the minor dimension.

9. A method of manufacturing a heated composite panel (500A,500B,600A,600B, 800,900), the method comprising:
providing a core (528A,528B,928);
positioning closeouts (536) around the core to surround the core and define a periphery of the panel, the closeouts having a density greater than a density of the core and including a plurality of recessed pockets (552,554,556);
providing a heating element (504A,504B,804,904) including a carbon fiber sheet extending between two opposed electrical buses (512A,512B,512B',812,912);
placing the heating element onto the core such that the electrical buses are received in at least one of the plurality of recessed pockets and the carbon fiber sheet extends over at least a portion of the core (528A,528B,928); and
sandwiching the core and the closeouts between a first reinforced phenolic skin (540,940) and a second reinforced phenolic skin (542,942) to encapsulate the core and embed the carbon fiber heating element within the panel.

10. The method of claim 9, further comprising embedding the carbon fiber heating element (504A,504B,804,904) within the first reinforced phenolic skin (540,940) by saturating the carbon fiber heating element (504A,504B,804,904) in at least one layer of liquid phenolic resin, placing a reinforcement layer over the carbon fiber heating element, saturating the reinforcement layer with at least one additional layer of liquid phenolic resin, and jointly curing all of the liquid phenolic resin layers to form the first reinforced phenolic skin having the carbon fiber heating element embedded therein, and where the closeouts (536) may be provided as phenolic blocks, and the method may include machining the at least one recessed pocket (552,554,556) into the phenolic blocks.

11. The method of claim 9, further comprising providing a pair of electrical wires (516, 520A,520B,820,920) coupled to the electrical buses (512A,512B,512B,812, 912) for coupling the heating element to a voltage source, and placing each of the pair of electrical wires into one of the plurality of recessed pockets (552,554,556).

12. The method of claim 11, further comprising providing the closeouts as phenolic blocks, and machining the at least one recessed pocket (552,554,556) into the phenolic blocks.

13. The method of claim 11, further comprising coupling each of the pair of wires (516, 520A,520B,820,920) to an electrically-conductive terminal block (560), and placing each of the electrically-conductive terminal blocks (560) into one of the plurality of recessed pockets (552,554,556), and may further comprise coupling a terminal post (564) to each of the electrically-conductive terminal blocks, such that the terminal posts (564) may protrude outwardly from the panel for coupling the carbon fiber heating element to the voltage source.

14. The method of claim 9, wherein the heating element is a first heating element (504A, 804,904), the method further comprising providing a second similar heating element (504B), and positioning the first and second heating elements in non-overlapping fashion over the core (528A,528B,928), and may further comprise electrically coupling the first and second heating elements in series.

## Patentansprüche

1. Platte (500A, 500B, 600A, 600B, 800,900) mit einer äußeren Fläche (549, 949), die zur Befestigung an einem Stützrahmen ausgelegt ist, und einer inneren Fläche (545, 945), die zum Definieren einer Grenze eines Raums ausgelegt ist, wobei die Platte aufweist:
einen Kern (528A, 528B, 928) der in einem Plattenrahmen eingeschlossen ist;
wobei der Kern erste und zweite Flächen und einen Umfang aufweist, wobei erste (540, 940) und zweite Häute (542, 942) an den ersten und zweiten Flächen des Kerns befestigt sind;
einen oder mehrere Abschlüsse (closeouts) (536), die zwischen den Häuten (540, 542, 940, 942) um den Umfang des Kerns (528A, 528B, 928) herum angeordnet sind, wobei der eine oder die mehreren Abschlüsse (536) an den ersten (540, 940) und zweiten Häuten (542, 942) befestigt sind;
ein Heizelement (504A, 504B, 704, 804, 904) nahe der inneren Fläche (545, 945) der Platte;
**dadurch gekennzeichnet, dass**
die Platte aus verstärktem Phenolmaterial besteht;
das Heizelement Karbonfasermaterial aufweist, das sich zwischen zwei gegenüberliegenden elektrischen Bussen (512A, 512B, 512B', 812, 912) erstreckt und diese elektrisch koppelt;
ein elektrischer Draht (516, 520A, 520B, 820, 920) an jeden der elektrischen Busse des Heizelements (504A, 504B, 804, 904) gekoppelt ist, um eine Spannung über das Heizelement einzuführen;
die elektrischen Busse (512A, 512B, 512B', 812, 912) eine Stärke haben, die größer ist, als die Stärke des Karbonfasermaterials; und
die elektrischen Busse in vertieften Taschen (552, 554, 556) des einen oder der mehreren Abschlüsse (536) aufgenommen sind.

2. Platte nach Anspruch 1, wobei das Karbonfasermaterial eine Vielzahl von Karbonfasersträngen aufweist, die in einem Rautenmuster oder einer perforierten Folie verwebt sind, und wobei jeder der elektrischen Busse (512A, 512B, 512B', 812, 912) ein Paar von Kupferplatten aufweisen kann, die ein korrespondierendes Ende des Karbonfasermaterial zwischen sich aufnehmen.

3. Platte nach Anspruch 1, wobei das Heizelement (504A, 504, 804, 904) in die erste Haut (540, 940) der Platte eingebettet ist und durch das verstärkte Phenolmaterial einstückig damit verbunden ist.

4. Platte nach Anspruch 1, wobei die elektrischen Drähte (512, 520A, 520B, 820, 920) in vertieften Taschen des einen oder der mehreren Abschlüsse positioniert sind, und wobei der eine oder die mehreren Abschlüsse, die die vertieften Taschen haben, bearbeitbare Phenolblöcke sein können.

5. Platte nach Anspruch 1, wobei jeder der elektrischen Drähte (516, 520A, 520B, 820, 920) an einem korrespondierenden elektrisch leitenden Anschlussblock (560) endet, wobei jeder der Anschlussblöcke (560) in einer korrespondieren vertieften Tasche (552, 554, 556) in dem einen oder den mehreren Abschlüssen (536) aufgenommen ist, wobei ein Anschlussstift (564) in jedem der Anschlussblöcke (560) positioniert ist und sich von der Platte nach außen erstreckt, um das Heizelement (504A, 504B, 804, 904) mit einer Spannungsquelle zu verbinden, und wobei der eine oder die mehreren Abschlüsse, die die vertieften Taschen (552, 554, 556) haben, bearbeitbare Phenolblöcke sein können.

6. Platte nach Anspruch 1, die des Weiteren ein Paar hohler Anschlussstücke (570) aufweist, die an die äußere Fläche der Platte gekoppelt sind, wobei jedes der hohlen Anschlussstücke einen Kanal bereitstellt, durch welchen ein korrespondierender der elektrischen Drähte (516, 520A, 520B, 820, 920) hindurchgeht und sich von der äußeren Fläche (549, 949) weg zur Verbindung mit einer Spannungsquelle erstreckt.

7. Platte nach Anspruch 1, wobei das Heizelement (504A, 804, 904) ein erstes Heizelement ist und die Platte des Weiteren wenigstens ein weiteres Heizelement (504B) aufweist, das mit dem ersten Heizelement in Reihe geschaltet ist, und wobei das erste Heizelement und das wenigstens eine weitere Heizelement einen im Wesentlichen äquivalenten Oberflächenbereich haben können und eine Vielzahl einheitlich beheizter Bereiche in der Platte bereitstellen können.

8. Platte nach Anspruch 7, wobei jedes des ersten Heizelements (504A, 504B, 804, 904) und des wenigstens einen weiteren Heizelements (504B) eine größere Dimension und eine kleinere Dimension hat und die elektrischen Busse (512A, 512B, 512B', 812, 912) über der größeren Dimension vorgesehen sind, und wobei jedes des ersten Heizelements und des wenigstens einen weiteren Heizelements eine größere Dimension und eine kleinere Dimension haben kann und die elektrischen Busse über der kleineren Dimension vorgesehen sein können.

9. Verfahren zum Herstellen einer beheizten Verbundplatte (500A, 500B, 600A, 600B, 800, 900), wobei das Verfahren umfasst:
Bereitstellen eines Kerns (528A, 528B, 928);
Positionieren von Abschlüssen (536) um den Kern herum, um den Kern zu umgeben und einen Umfang der Platte zu definieren, wobei die Abschlüsse eine Dichte haben, die größer ist, als die Dichte des Kerns, und eine Vielzahl vertiefter Taschen (552, 554, 556) aufweisen;
Bereitstellen eines Heizelements (504A, 504B, 804, 904), das eine Karbonfaserbahn aufweist, die sich zwischen zwei gegenüberliegenden elektrischen Bussen (512A, 512B, 512B', 812, 912) erstreckt;
Platzieren des Heizelement auf dem Kern, so dass die elektrischen Busse in wenigstens einer der Vielzahl vertiefter Taschen aufgenommen werden und sich die Karbonfaserbahn über wenigstens einen Teil des Kerns (528A, 528B, 928) erstreckt;
und
Positionieren des Kerns und der Abschlüsse zwischen einer ersten verstärkten Phenolhaut (540, 940) und einer zweiten verstärkten Phenolhaut (542, 942), um den Kern einzukapseln und das Karbonfaser-Heizelement in die Platte einzubetten.

10. Verfahren nach Anspruch 9, das des Weiteren das Einbetten des Karbonfaser-Heizelements (504A, 504B, 804, 904) in die erste verstärkte Phenolhaut (540, 940) umfasst durch Sättigen des Karbonfaser-Heizelements (504A, 504B, 804, 904) in wenigstens einer Schicht aus flüssigem Phenolharz, Platzieren einer Verstärkungsschicht über dem Karbonfaser-Heizelement, Sättigen der Verstärkungsschicht mit wenigstens einer zusätzlichen Schicht aus flüssigem Phenolharz, und gemeinsames Aushärten aller Schichten aus flüssigem Phenolharz, um die erste verstärkte Phenolhaut zu bilden, in der das Karbonfaser-Heizelement eingebettet ist, und wobei die Abschlüsse (536) als Phenolblöcke bereitgestellt werden können, und wobei das Verfahren das maschinelle Einarbeiten der wenigstens einen vertieften Tasche (552, 554, 556) in die Phenolblöcke umfasst.

11. Verfahren nach Anspruch 9, das des Weiteren das Bereitstellen eines Paars elektrischer Drähte (516, 520A, 520B, 820, 920) umfasst, die an die elektrischen Busse (512A, 512B, 512B', 812, 912) gekoppelt sind, um das Heizelement an eine Spannungsquelle zu koppeln, und das Platzieren jedes des Paars elektrischer Drähte in einer der Vielzahl vertiefter Taschen (552, 554, 556).

12. Verfahren nach Anspruch 11, das des Weiteren das Bereitstellen der Abschlüsse als Phenolblöcke umfasst, und das maschinelle Einarbeiten wenigstens einer vertieften Tasche (552, 554, 556) in die Phenolblöcke.

13. Verfahren nach Anspruch 11, das des Weiteren das Koppeln jedes des Paars von Drähten (516, 520A, 520B, 820, 920) an einen elektrisch leitenden Anschlussblock (560) umfasst, und das Platzieren jedes der elektrisch leitenden Anschlussblöcke (560) in einer der Vielzahl vertiefter Taschen (552, 554, 556), und das des Weiteren das Koppeln eines Anschlussstifts (564) an jeden der elektrisch leitenden Anschlussblöcke umfassen kann, so dass die Anschlussstifte (564) von der Platte nach außen vorstehen können, um das Karbonfaser-Heizelement an die Spannungsquelle zu koppeln.

14. Verfahren nach Anspruch 9, wobei das Heizelement ein erstes Heizelement (504A, 804, 904) ist und das Verfahren des Weiteren das Bereitstellen eines zweiten ähnlichen Heizelements (504B) und das Positionieren der ersten und zweiten Heizelemente auf nicht überlappende Art und Weise über dem Kern (528A, 528B, 928) umfasst, und des Weiteren das elektrische Schalten der ersten und zweiten Heizelemente in Reihe umfassen kann.

## Revendications

1. Panneau (500A, 500B, 600A, 600B, 800, 900) présentant une face extérieure (549, 949) associée, adaptée à une fixation sur un cadre support, et une face intérieure (545, 945) associée, adaptée à une définition d'une limite d'un compartiment, le panneau comprenant :
une âme (528A, 528B, 928) encapsulée dans un cadre de panneau,
l'âme présentant des première et seconde faces associées et une périphérie associée, des premières (540, 940) et secondes peaux (542, 942) fixées aux première et seconde faces de l'âme ;
une ou plusieurs terminaisons (536) disposées entre les peaux (540, 542, 940, 942) autour de la périphérie de l'âme (528A, 528B, 928), où une ou plusieurs terminaisons (536) sont attachées aux premières (540, 940) et secondes peaux (542, 942) ;
un élément chauffant (504A, 504B, 704, 804, 904) adjacent à la face intérieure (545, 945) du panneau ;
**caractérisé par** :
le cadre de panneau qui est en matériau phénolique renforcé ;
l'élément chauffant qui comprend un matériau en fibre carbone s'étendant entre deux bus électriques opposées (512A, 512B, 512B', 812, 912) et couplant électriquement ceux-ci ;
un fil électrique (516, 520A, 520B, 820, 920) couplé à chacun des bus électriques de l'élément chauffant (504A, 504B, 804, 904) pour introduire une tension à travers l'élément chauffant ;
les bus électriques (512A, 512B, 512B', 812, 912) ayant une épaisseur supérieure à l'épaisseur du matériau en fibre de carbone ; et
les bus électriques étant reçus dans des poches évidées (552, 554, 556) d'une ou plusieurs terminaisons (536).

2. Panneau selon la revendication 1, dans lequel le matériau en fibre de carbone comprend une pluralité de brins en fibre de carbone, tissés ensemble selon une disposition en diamant ou dans un film perforé, et où chacun des bus électriques (512A, 512B, 512B', 812, 912) peut comprendre une paire de plaques de cuivre qui prennent en sandwich une extrémité correspondante du matériau en fibre de carbone.

3. Panneau selon la revendication 1, dans lequel l'élément chauffant (504A, 504B, 804, 904) est intégré dans la première peau (540, 940) du panneau, et relié intégralement à celle-ci par le matériau phénolique renforcé.

4. Panneau selon la revendication 4, dans lequel les fils électriques (516, 520A, 520B, 820, 920) sont positionnés dans des poches évidées d'une ou plusieurs terminaisons, et où l'une ou plusieurs des terminaisons ayant les poches évidées peuvent être des plaques phénoliques usinables.

5. Panneau selon la revendication 1, dans lequel chacun des fils électriques (516, 520A, 520B, 820, 920) se termine au niveau d'une plaque à bornes correspondante électriquement conductrice (560), chacune des plaques à bornes (560) étant reçue dans une poche évidée correspondante (552, 554, 556) dans l'une ou plusieurs des terminaisons (536), dans lequel un poteau terminal (564) est positionné dans chacune des plaques à bornes (560) et s'étend vers l'extérieur du panneau pour relier l'élément chauffant (504A, 504B, 804, 904) à une source de tension, et où l'une ou plusieurs des terminaisons ayant les poches évidées (552, 554, 556) peuvent être des plaques phénoliques usinables.

6. Panneau selon la revendication 1, comprenant en outre une paire de raccords creux (570) couplés à la face extérieure du panneau, chacun des raccords creux fournissant un conduit à travers lequel un des fils électriques correspondants (516, 520A, 520B, 820, 920) passe et s'étend à distance de la face extérieure (549, 949) pour être relié à une source de tension.

7. Panneau selon la revendication 1, dans lequel l'élément chauffant (504A, 804, 904) est un premier élément chauffant, le panneau comprenant en outre au moins un élément chauffant additionnel (504B) couplé en série au premier élément chauffant, et où le premier élément chauffant et l'au moins un élément chauffant additionnel peuvent avoir une zone en surface sensiblement équivalente et peuvent fournir une pluralité de zones chauffées uniformément dans le panneau.

8. Panneau selon la revendication 7, dans lequel chacun des premier élément chauffant (504A, 504B, 804, 904) et l'au moins un élément chauffant additionnel (5B) présente une dimension majeure et une dimension mineure, et les bus électriques (51 2A, 51 2B, 51 2B', 812, 912) sont fournis à travers la dimension majeure, et où chacun des premier élément chauffant et de l'au moins un élément chauffant additionnel peut avoir une dimension majeure et une dimension mineure, et les bus électriques peuvent être fournis à travers la dimension mineure.

9. Procédé de fabrication d'un panneau composite chauffé (500A, 500B, 600A, 600B, 800, 900), le procédé comprenant :
la fourniture d'une âme (528A, 528B, 928) ;
le positionnement de terminaisons (536) autour de l'âme pour entourer l'âme et définir une périphérie du panneau, les terminaisons ayant une densité supérieure à une densité de l'âme et incluant une pluralité de poches évidées (552, 554, 556) ;
la fourniture d'un élément chauffant (504A, 504B, 804, 904) incluant une feuille en fibre à charbon s'étendant entre deux bus électriques opposées (512A, 512B, 512B', 812, 912) ;
le placement de l'élément chauffant sur l'âme de telle sorte que les bus électriques sont reçus dans au moins une de la pluralité de poches évidées et la feuille en fibre à carbone s'étend sur au moins une partie de l'âme (528A, 528B, 928) ; et
la mise en sandwich de l'âme et des terminaisons entre une première peau phénolique renforcée (540, 940) et une seconde peau phénolique renforcée (542, 942) pour encapsuler l'âme et intégrer l'élément chauffant en fibre de carbone à l'intérieur du panneau.

10. Procédé selon la revendication 9, comprenant en outre l'intégration de l'élément chauffant en fibre de carbone (504A, 504B, 804, 904) à l'intérieur de la peau phénolique renforcée (540, 940) en saturant l'élément chauffant en fibre de carbone (504A, 504B, 804, 904) dans au moins une couche de résine phénolique liquide, le placement d'une couche de renfort sur l'élément chauffant en fibre de carbone, la saturation de la couche de renfort avec au moins une couche supplémentaire de résine phénolique liquide, et conjointement la vulcanisation de toutes les couches de résine phénolique liquide pour former la première peau phénolique renforcée présentant l'élément chauffant en fibre de carbone intégré à l'intérieur de celle-ci, et où les terminaisons (536) peuvent être fournies sous forme de plaques phénoliques, et le procédé peut comprendre l'usinage d'au moins une poche évidée (552, 554, 556) dans les plaques phénoliques.

11. Procédé selon la revendication 9, comprenant en outre la fourniture d'une paire de fils électriques (516, 520A, 520B, 820, 920) couplés aux bus électriques (51 2A, 51 2B, 51 2B', 812, 912) pour coupler l'élément chauffant à une source de tension, et le placement de chacune des paires de fils électriques dans une ou plusieurs de la pluralité de poches évidées (552, 554, 556).

12. Procédé selon la revendication 11, comprenant en outre la fourniture des terminaisons sous forme de plaques phénoliques et l'usinage de l'au moins une poche évidée (552, 554, 556) dans les plaques phénoliques.

13. Procédé selon la revendication 11, comprenant en outre le couplage de chacune des paires de fils (516, 520A, 520B, 820, 920) à une plaque à bornes électriquement conductrice (560), et le placement de chacune des plaques à bornes électriquement conductrices (560) dans une de la pluralité de poches évidées (552, 554, 556) et pouvant comprendre en outre le couplage d'un poteau terminal (564) à chacune des plaques à bornes électriquement conductrices, de telle sorte que les poteaux terminaux (564) peuvent dépasser vers l'extérieur du panneau pour coupler l'élément chauffant en fibre de carbone à la source de tension.

14. Procédé selon la revendication 9, dans lequel l'élément chauffant est un premier élément chauffant (504A, 804, 904), le procédé comprenant en outre la fourniture d'un second élément chauffant similaire en fibre de carbone (504B) et le positionnement des premier et second éléments chauffants de manière non chevauchante au-dessus de l'âme (528A, 528B, 928) et pouvant en outre comprendre le couplage électrique en série des premier et second éléments chauffants.
